# FASCICULE DE BREVET EUROPEEN

(11) **EP 3 260 360 B1**
(45) Date de publication et mention de la délivrance du brevet: **22.05.2019**
(21) Numéro de dépôt: 17173066.6
(22) Date de dépôt: 26.05.2017
(51) Int. Cl.: B62D 49/06, B62D 49/08

(54) **DISPOSITIF DE LESTAGE AMÉLIORÉ POUR TRACTEUR, NOTAMMENT DE TYPE AGRICOLE**
VERBESSERTE BALLASTVORRICHTUNG FÜR TRAKTOR, INSBESONDERE VOM LANDWIRTSCHAFTLICHEN TYP
IMPROVED COUNTERWEIGHT SYSTEM FOR TRACTOR, IN PARTICULAR OF THE AGRICULTURAL TYPE

(30) Priorité: 22.06.2016 FR 1655811
(43) Date de publication de la demande: 27.12.2017
(73) Titulaire: Althimasse, 22600 Loudéac (FR)
(72) Inventeur: THOONSEN, Joseph, 22600 Loudéac (FR)
(74) Mandataire: Fédit-Loriot

(56) Documents cités:
- EP-A1- 2 275 324
- EP-A1- 2 380 804
- EP-A1- 2 842 808
- DE-U1-202011 000 694
- FR-A1- 2 953 478

## Description

L'invention concerne un dispositif de lestage pour tracteur, notamment pour tracteur agricole, comprenant une masse monobloc destinée à être accrochée à un dispositif de relevage ou à un porte-masse du tracteur, notamment pour accroître le poids du tracteur durant des opérations requérant des forces de traction élevées.

De façon conventionnelle, une telle masse est destinée à être portée par un dispositif de relevage avant et/ou arrière du tracteur, constitué typiquement de deux bras de relevage de part et d'autre de la masse, pourvus à leur extrémité de crochet soutenant la masse via des axes transversaux faisant saillie de la masse sur ses faces latérales. Des masses de ce type sont bien connues, notamment par l'exemple qu'en donne le système commercialisé sous la marque « Easymass ® ». Ce dernier système est en outre adaptable et permet d'adjoindre une masse secondaire à la masse principale accrochée à l'avant du tracteur. La masse secondaire peut être rapportée au besoin contre la face avant de la masse principale et maintenue contre celle-ci par un dispositif d'ancrage de manière à alourdir l'ensemble. Ce système présente toutefois l'inconvénient d'augmenter significativement le porte-à-faux à l'avant du tracteur lorsque la masse secondaire est montée.

Aussi, la demanderesse a développé un système de contrepoids facilement modulable permettant de charger une masse réglable sur le dispositif de relevage du tracteur à l'avant ou à l'arrière du tracteur, tout en réduisant le porte-à-faux avant ou arrière, quelle que soit la masse embarquée. Ce système, décrit dans le document de brevet EP 2 275 324 au nom de la demanderesse, comporte une masse principale monobloc d'alourdissement destinée à être accrochée à un dispositif de relevage d'un tracteur agricole, présentant dans sa partie inférieure au moins un logement de réception d'une masse secondaire d'alourdissement apte à être disposée en-dessous de la masse principale, le logement de réception coopérant avec une protubérance correspondante de la masse secondaire, assurant avec cette dernière un ancrage sous la forme d'une liaison de type « queue d'aronde », dont la direction longitudinale est sensiblement parallèle à la direction de progression du tracteur.

Un tel agencement permet d'empiler verticalement plusieurs blocs, dont la masse principale et une ou plusieurs masse secondaires situées sous la masse principale, de sorte que le porte-à-faux n'est pas ou très peu augmenté par rapport à une configuration « masse principale » seule. En outre, ce système contribue à une parfaite intégration des masses entre elles, favorisant l'aspect esthétique global du système.

Au delà de la problématique de lestage et de la dimension esthétique, les attentes des utilisateurs poussent les concepteurs de systèmes de lestage à proposer toujours plus de fonctionnalités susceptibles de répondre à ces attentes. En particulier, un besoin des utilisateurs concerne la possibilité de pouvoir embarquer différents outils sur le tracteur. A cet égard, on connaît du document de brevet FR2953478, une solution consistant à intégrer un caisson à outils dans le bloc fonte constituant la masse de lestage. Pour ce faire, la masse de lestage comprend un logement situé sur le profil haut de la masse, qui peut être éventuellement recouvert d'un couvercle. Ce logement permet ainsi d'équiper les tracteurs agricoles d'un espace de rangement supplémentaire pouvant avantageusement accueillir différents outillages nécessaires aux travaux agricoles, tels que par exemple, des clés, des boules d'attelage, etc. Cet espace de rangement supplémentaire présente toutefois l'inconvénient de ne pouvoir procurer qu'un volume de rangement relativement réduit. En outre, la présence de l'espace de rangement implique d'aménager une cavité dans le corps de la masse de lestage, au détriment du poids global de celle-ci, ce qui n'est pas souhaitable. Le poids perdu peut être compensé en augmentant la taille de la masse de lestage, au détriment cette fois de la compacité.

Aussi, il existe un besoin pour un dispositif de lestage amélioré, qui soit d'une part, facilement modulable sans risque d'augmenter le porte-à-faux avant ou arrière, quelle que soit la masse embarquée sur le tracteur et, d'autre part, qui permette l'intégration d'un espace de rangement sans les inconvénients précités.

A cet effet, l'invention concerne, selon un premier de ses aspects, une masse principale d'alourdissement venue de fonderie, destinée à être accrochée à un dispositif de relevage ou à un porte masse d'un tracteur, notamment de type agricole, ladite masse principale comprenant une face supérieure, une face inférieure, deux faces orientées sensiblement transversalement à la direction de progression du tracteur, et deux faces latérales sensiblement parallèles à la direction de progression lorsqu'elle est fixée au tracteur, ladite masse principale présentant sur sa face inférieure au moins un logement en queue d'aronde femelle apte à coopérer avec une protubérance correspondante en queue d'aronde mâle d'une masse secondaire d'alourdissement pour le montage par emboîtement de ladite masse secondaire d'alourdissement suivant une direction d'emboîtement sensiblement parallèle à la direction de progression du tracteur, ledit dispositif étant caractérisé en ce que ladite face supérieure forme un plateau supérieur comportant un moyen de pré-positionnement et de centrage d'un caisson destiné à être rapporté sur ladite masse principale, et en ce que lesdites faces latérales sont aptes à coopérer avec des flasques latéraux dudit caisson rapportés en applique sur lesdites faces latérales et comportent des orifices de fixation aptes à recevoir des vis de fixation venant à coopérer avec lesdits flasques latéraux pour la fixation dudit caisson sur ladite masse principale.

Selon un mode de réalisation, ledit moyen de pré-positionnement et de centrage comprend au moins une rainure pratiquée dans l'épaisseur dudit plateau supérieur, ladite rainure étant apte à recevoir un pion de pré-centrage solidaire dudit caisson, ledit pion venant s'insérer dans ladite rainure pour permettre le positionnement dudit caisson sur ledit plateau supérieur.

Avantageusement, ladite rainure s'étend dans une direction sensiblement parallèle la direction de progression du tracteur et débouche au niveau de la face orientée sensiblement transversalement à la direction de progression du tracteur située à l'opposé du tracteur par rapport à ladite masse principale lorsque ladite masse principale est fixée sur le tracteur.

Avantageusement, ladite rainure présente au moins une butée permettant de figer ledit caisson sur ledit plateau supérieur dans une position prédéterminée lorsqu'il est rapporté sur ladite masse principale.

De préférence, chacune desdites faces latérales comporte deux orifices de fixation alignés verticalement pour la fixation dudit caisson.

Selon un mode de réalisation, ladite masse principale est adaptée pour être fixée au tracteur par l'intermédiaire de deux axes transversaux constituant respectivement un moyen de prise pour un dispositif de relevage du tracteur, chacun des axes transversaux étant monté rigidement et perpendiculairement au travers d'un étrier de fixation apte à être fixé sur ladite masse principale au travers desdits orifices de fixation prévus sur lesdites faces latérales de ladite masse principale.

Avantageusement, ledit étrier de fixation présente au moins deux positions de montage desdits axes transversaux dans le sens vertical permettant de modifier la garde au sol de ladite masse principale lorsqu'elle est fixée au tracteur.

Avantageusement, ladite masse principale peut également comprendre une empreinte de fixation aménagée dans ladite face orientée sensiblement transversalement à la direction de progression du tracteur située du côté du tracteur lorsque ladite masse principale est fixée sur le tracteur, ladite empreinte de fixation étant destinée à coopérer avec un porte-masse fixé rigidement au tracteur pour la fixation de ladite masse principale.

Avantageusement, ladite masse principale peut également comprendre un moyen de manutention noyé dans ladite masse principale au niveau de ladite face orientée sensiblement transversalement à la direction de progression du tracteur située à l'opposé du tracteur par rapport à ladite masse principale lorsque ladite masse principale est fixée sur le tracteur.

L'invention concerne également, selon un autre de ses aspects, un caisson, notamment un caisson à outils, caractérisé en ce qu'il est adapté pour être rapporté sur une masse principale d'alourdissement telle que décrite ci-dessus, ledit caisson comprenant des flasques latéraux en prolongement de parois latérales dudit caisson, aptes à être rapportés en applique contre les lesdites faces latérales de ladite masse principale et au moins un pion de pré-centrage solidaire dudit caisson apte à coopérer avec ledit moyen de pré-positionnement et de centrage solidaire dudit plateau supérieur de ladite masse principale.

Avantageusement, les parois latérales du caisson comportent au moins un alésage à travers lequel est apte à déboucher à l'intérieur du caisson une portion d'extrémité de l'axe transversal traversant ledit étrier de fixation.

Avantageusement, le caisson comprend une potence agencée au niveau d'une paroi arrière dudit caisson, destinée à coopérer avec un bras de retenue solidaire du tracteur, ladite potence étant formée de deux platines verticales faisant saillie vers le haut depuis un bord supérieur de ladite paroi arrière caisson et entre lesquelles un axe de retenue est apte à être monté pour la liaison avec ledit bras de retenue.

L'invention concerne également, selon encore un autre de ses aspects, un dispositif de lestage pour tracteur, notamment pour tracteur agricole, caractérisé en ce qu'il comprend une masse principale d'alourdissement telle que décrite ci-dessus et un caisson tel que décrit ci-dessus, rapporté sur ladite masse principale.

D'autres caractéristiques et avantages de l'invention ressortiront clairement de la description qui en est faite ci-après d'un mode de réalisation particulier de l'invention présenté à titre indicatif et nullement limitatif, en référence aux figures suivantes, parmi lesquelles :
- la figure 1 illustre une vue schématique de face, en perspective du dispositif de lestage selon l'invention comprenant une masse principale d'alourdissement conforme à l'invention et un caisson à outils conforme à l'invention, rapporté sur la masse principale ;
- la figure 2 illustre le dispositif de la figure 1 en vue éclatée ;
- la figure 3 illustre une vue schématique de l'arrière du dispositif de la figure 1.

Le dispositif de lestage 1 représenté sur les figures est destiné à être monté sur un tracteur, par exemple de type agricole. Il comprend une masse principale 10 sur laquelle peut être rapporté un caisson 20, typiquement un caisson à outils, susceptible de procurer un espace de rangement conséquent, en particulier pour accueillir différents outillages nécessaires aux travaux agricoles. La masse principale 10 est une masse dite monobloc, d'une seule pièce, par exemple en fonte, venue de fonderie. Le poids de la masse principale est par exemple de 600 ou 900 Kg. La masse principale est destinée à être accrochée à un dispositif de relevage avant ou arrière du tracteur, classiquement constitué de deux bras de relevage pourvus à leur extrémité libre d'un crochet en « U » formant un palier pour recevoir des axes transversaux 2, 3, montés rigidement et perpendiculairement au travers d'étriers de fixation 4 eux-mêmes destinés à être fixés sur les côtés de la masse principale 10. La liaison entre les axes transversaux 2, 3 et les bras est réalisée via des rotules et des moyens de blocage adaptés à emprisonner les axes 2, 3 et leur rotule respective dans les U. Les axes transversaux 2, 3 sont dénommés ainsi en relation avec la direction de progression du tracteur.

La masse principale 10, lorsqu'elle est fixée au tracteur, présente une face supérieure 11, une face inférieure 12, deux faces 13, 14, respectivement une face avant et une face arrière, orientées sensiblement transversalement à la direction de progression du tracteur et deux faces latérales 15, 16 sensiblement parallèles à la direction de progression du tracteur. Les notions « avant » ou « arrière » sont utilisées ici en relation avec un mode de réalisation où la masse principale 10 est située à l'avant du tracteur. On comprend que dans le cas d'une masse située à l'arrière du tracteur, les notions « avant » ou « arrière » sont à inverser pour comprendre l'orientation réelle (l'avant devient l'arrière et réciproquement).

Cette masse 10 est dite masse principale dans la mesure où il est possible de lui adjoindre, à titre facultatif, une masse secondaire d'alourdissement, de poids variable, selon les principes exposés dans le document de brevet EP2275324. Aussi, comme expliqué dans ce document, la masse principale 10 est conçue pour accueillir dans une zone inférieure une masse secondaire monobloc (non représentée) destinée à alourdir encore le dispositif de lestage embarqué sur le tracteur en fonction des besoins. Pour ce faire, la masse principale 10 présente sur sa face inférieure 12 deux logement 121, 122 en queue d'aronde femelle, s'étendant selon la direction de progression du tracteur, et prévus pour coopérer avec deux protubérances correspondantes en queue d'aronde mâle agencés en partie supérieure de la masse secondaire d'alourdissement. Les logements 121, 122 sont débouchant sur la face avant 13 de la masse principale 10 de sorte que les protubérances sont introduites dans les logements 121, 122 par la face avant 13 de la masse principale 10, puis la masse secondaire est déplacée vers l'arrière. A l'arrière, les logements 121, 122 peuvent être non débouchant ou être débouchant. Ainsi, les logements 121, 122 en forme de queue d'aronde femelle permettent le montage par emboîtement de masses secondaires d'alourdissement suivant une direction d'emboîtement sensiblement parallèle à la direction de progression du tracteur.

Conformément à l'invention, la face supérieure 11 de la masse principale forme un plateau supérieur sur lequel vient reposer le caisson à outils 20 lorsqu'il est rapporté sur la masse principale 10. Plus précisément, le caisson à outils 20, réalisée par exemple de manière mécano soudée, comporte un fond plat 21, de dimensions sensiblement égales à celles du plateau supérieur de la masse principale10 et apte à venir en appui sur celui-ci, et des flasques latéraux 22, 23, s'étendant vers le bas depuis des parois latérales 24, 25 du caisson à outils 20 et destinés à être rapportés en applique sur les faces latérales 15, 16 de la masse principale 10. Le caisson à outils 20 comporte encore une paroi arrière 26, s'étendant transversalement entre les deux parois latérales 24, 25. Ainsi, les parois latérales et arrière, ainsi que le fond plat, délimitent l'espace de rangement du caisson à outils.

La face supérieure 11 formant le plateau supérieur de la masse principale 10 est aménagée de façon à procurer un moyen 110 de pré-positionnement et de centrage du caisson à outils 20. Ce moyen 110 de pré-positionnement et de centrage comprend, selon l'exemple de réalisation, un évidement préférentiellement en forme de rainure 111 présentant un profil de section rectangulaire ou trapézoïdal, pratiquée dans l'épaisseur du plateau supérieur 11 de la masse principale 10. La rainure 111 s'étend préférentiellement dans une direction sensiblement parallèle la direction de progression du tracteur. La rainure 111 est prévue pour recevoir un pion de pré-centrage (non représenté), agencé sur une face du fond plat 21 du caisson venant en regard avec le plateau supérieur 11, de sorte que le pion vienne s'insérer dans la rainure 111 pour permettre le positionnement du caisson sur le plateau supérieur de la masse principale 10. Dans cette position d'insertion, le pion reçu dans la rainure 111 vient en butée dans celle-ci, ce qui permet de figer le caisson 20 sur le plateau supérieur 11 dans une position prédéterminée lorsqu'il est rapporté sur la masse principale. On prévoit que la rainure 111 pratiquée dans le plateau supérieur de la masse principale 10 débouche au niveau de la face avant 13 de la masse principale 10 de façon à faciliter le désengagement du pion de centrage solidaire du caisson à outils de la rainure.

En outre, les faces latérales 15, 16 de la masse principale 10, contre lesquelles les flasques latéraux 22, 23 du caisson viennent en applique lorsque le caisson est rapporté sur la masse principale 10, comportent des orifices de fixation 150, qui sont prévus pour recevoir des vis de fixation (non représentées) venant à coopérer avec les flasques latéraux 22, 23 pour la fixation du caisson 20 sur la masse principale 10. On prévoit de préférence deux orifices de fixation 150 alignés dans la direction vertical sur les faces latérales respectives 15, 16 de la masse principale 10. Aussi, les flasques latéraux 22, 23 du caisson 20 comportent des orifices correspondants pour le passage des vis de fixation destinées à pénétrer dans les orifices de fixation 150 prévus sur les faces latérales respectives 15, 16 de la masse principale 10. Lorsque le caisson 20 rapporté sur la masse principale 10 est positionné dans la position prédéterminée via le moyen de pré-positionnement et de centrage 110, les orifices ménagés sur les flasques latéraux 22, 23 du caisson 20 sont alignés avec les orifices de fixation 150 agencés sur les faces latérales 15, 16 de la masse principale 10.

La masse principale 10 dispose ainsi d'une part, de moyens de fixation d'une masse secondaire d'alourdissement, constitués par les logements 121, 122 en queue d'aronde femelle aménagés sur la face inférieure 12 de la masse principale et, d'autre part, de moyens de fixation d'un caisson à outils procurant un espace de rangement indépendant de la masse, constitués par la rainure 111 et les orifices de fixation 150 aménagés respectivement sur la face supérieure 11 et les faces latérales 15, 16 de la masse principale 10.

Comme indiqué précédemment, chacun des axes transversaux 2, 3 est monté au travers d'étriers de fixation 4, préférentiellement rapportés soudés sur les parois latérales 24, 25 et les flasques latéraux 24,25 du caisson à outil 20, et par ailleurs également fixés au corps de la masse principale 10, au niveau de ses faces latérales 15, 16. Chaque étrier de fixation 4 comprend deux parois opposées 42, 43, sensiblement parallèles à la direction de progression du tracteur lorsque l'étrier est fixé au corps de masse, respectivement une première paroi 42 prévue pour être située du côté la masse principale et une deuxième paroi 43 située à l'opposé de la masse principale par rapport à la première paroi. Les étriers de fixation 4 sont préférentiellement fixés sur la masse principale 10 au travers des orifices de fixation 150 prévus sur les faces latérales 15, 16 de la masse principale 10 pour la fixation du caisson à outils 20. Les étriers de fixation 4 comportent alors des orifices 40, pratiqués sur la première paroi 42, destinés à être alignés avec les orifices correspondants prévus sur les flasques latéraux 22, 23 du caisson à outil 20 et les orifices de fixations 150 prévus sur les faces latérales 15, 16 de la masse principale 10. Les vis de fixation reçues dans les orifices de fixation 150 des faces latérales 15, 16 de la masse principale sont donc conçues pour relier ensemble les étriers de fixation 4, le caisson à outils 20 et le corps de la masse principale 10. Lorsque les étriers de fixation 4 sont fixés à la masse principale 10, les axes transversaux 2, 3 sont dans l'alignement l'un de l'autre.

En outre, chaque étrier de fixation 4 présente préférentiellement deux positions de montage des axes transversaux 2, 3 dans le sens vertical, permettant de définir deux positions en hauteur de la masse relativement au tracteur, dont une position haute et une position basse. On peut ainsi régler la garde au sol de la masse principale 10 lorsqu'elle est fixée au tracteur via ces axes transversaux 2, 3. Chaque position de montage d'un axe transversal sur l'étrier de fixation 1 est définie par une paire d'alésages 41 situés en vis-à-vis sur les parois opposées 42, 43 de l'étrier de fixation 4, entre lesquels est monté l'axe transversal, dont une portion d'extrémité débouche en outre à l'intérieur du caisson à travers un alésage correspondant 27 ménagé sur les parois latérales du caisson rapporté sur la masse principale et prévu pour être aligné avec la paire d'alésage 41 de l'étrier de fixation 4. Cette portion d'extrémité d'arbre débouchant est par exemple bloquée par une goupille et permet de garantir un accrochage solide.

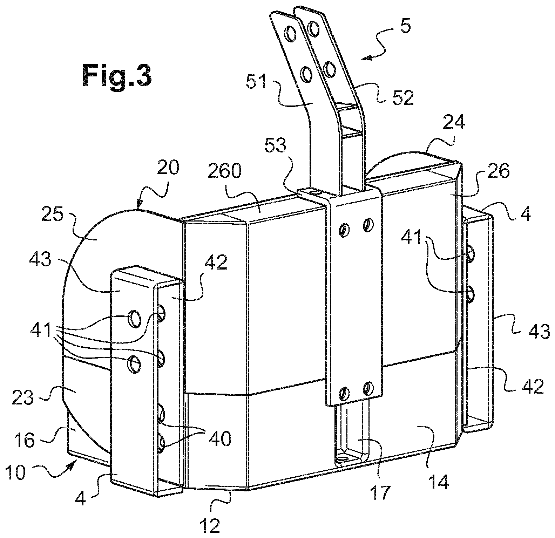

Comme il apparaît à la figure 3, la masse principale 10 peut également comprendre une empreinte de fixation 17 aménagée dans la face arrière 14 de la masse principale. Cette empreinte de fixation est destinée à coopérer avec un porte-masse fixé rigidement au tracteur pour la fixation de la masse principale. Ainsi, la masse principale 10 peut également être montée sur un porte-masse, qui constitue une alternative au dispositif de relevage évoqué précédemment, pour les tracteurs qui ne sont pas équipés d'un tel dispositif.

La masse principale 10 peut encore comprendre un moyen de manutention (non représenté) agencé au niveau de sa face avant 13, en particulier au niveau de la portion sensiblement centrale de la face avant située entre les deux logements 121, 122. Ce moyen de manutention peut se présenter sous la forme de deux plaques de manutention sensiblement parallèles à la direction de progression du tracteur, noyées dans la masse principale 10 et faisant saillie de la face avant de la masse principale 10. Ces deux plaques sont prévues pour coopérer avec un axe pour la liaison avec un système de treuillage par exemple.

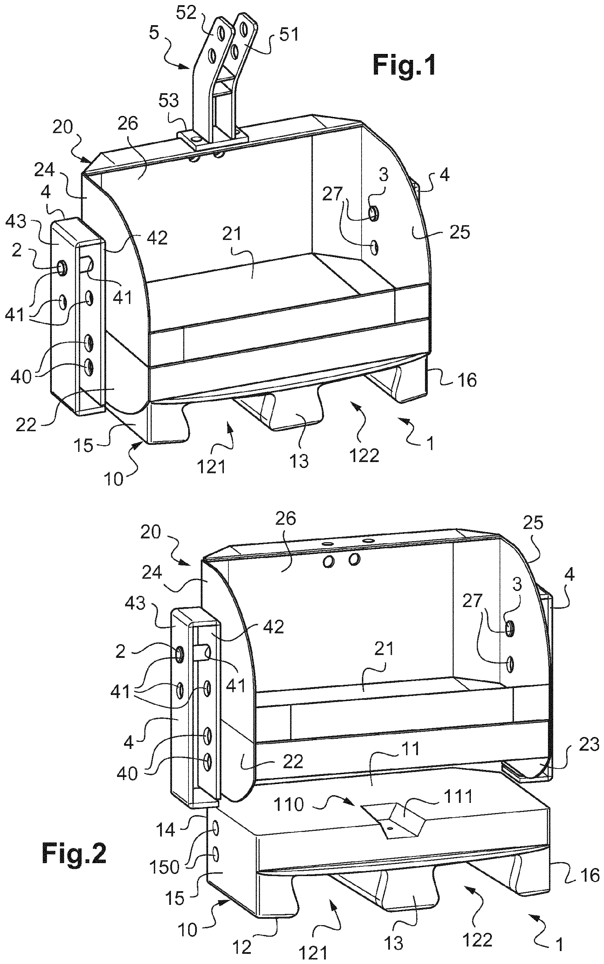

Le dispositif de relevage du tracteur, outre les deux bras de relevage destinés à venir en prise avec les axes transversaux 2, 3 situés sur les côtés du dispositif de lestage 1, peut également comporter un bras de retenue situé en position haute et sensiblement médiane du dispositif de relevage. Dans ce cas, comme illustré aux figures 1 et 3, le dispositif de lestage 1 dispose d'un moyen d'accrochage supplémentaire 5, permettant de le relier au bras de retenue haut du dispositif de relevage du tracteur. Un tel accrochage permet notamment d'empêcher le balancement du dispositif de lestage autour des axes transversaux 2, 3. Ce moyen d'accrochage supplémentaire 5 comprend une potence fixée sur le caisson 20 rapporté sur la masse principale 10, destinée à coopérer avec le bras de retenue du dispositif de relevage. La potence 5 est agencée au niveau de la paroi arrière 26 du caisson 20, en position sensiblement médiane, de façon à faire saillie vers le haut depuis un bord supérieur 260 de la paroi arrière 26 du caisson. La potence est formée de deux platines verticales 51, 52, sensiblement parallèles à la direction de progression du tracteur, solidaires d'une base 53 rapportée vissée sur le caisson 20. Selon l'exemple de réalisation, la base 53 est formée en équerre et est fixée par deux vis sur le bord supérieur 260 et par quatre vis sur la paroi arrière du caisson. Le bras de retenue solidaire du tracteur peut alors être raccordé et maintenu entre ces platines 51, 52 via un système à axe de retenue et goupille de verrouillage (non représentés).

## Revendications

1. Masse principale (10) d'alourdissement venue de fonderie, destinée à être accrochée à un dispositif de relevage ou à un porte masse d'un tracteur, notamment de type agricole, ladite masse principale (10) comprenant une face supérieure (11), une face inférieure (12), deux faces (13, 14) orientées sensiblement transversalement à la direction de progression du tracteur, et deux faces latérales (15, 16) sensiblement parallèles à la direction de progression lorsqu'elle est fixée au tracteur, ladite masse principale présentant sur sa face inférieure (12) au moins un logement (121, 122) en queue d'aronde femelle apte à coopérer avec une protubérance correspondante en queue d'aronde mâle d'une masse secondaire d'alourdissement pour le montage par emboîtement de ladite masse secondaire d'alourdissement suivant une direction d'emboîtement sensiblement parallèle à la direction de progression du tracteur, ledit dispositif étant **caractérisé en ce que** ladite face supérieure (11) forme un plateau supérieur comportant un moyen de pré-positionnement et de centrage (110) d'un caisson (20) destiné à être rapporté sur ladite masse principale, et **en ce que** lesdites faces latérales (15, 16) sont aptes à coopérer avec des flasques latéraux (22, 23) dudit caisson rapportés en applique sur lesdites faces latérales et comportent des orifices de fixation (150) aptes à recevoir des vis de fixation venant à coopérer avec lesdits flasques latéraux pour la fixation dudit caisson sur ladite masse principale.

2. Masse principale selon la revendication 1, **caractérisé en ce que** ledit moyen de pré-positionnement et de centrage (110) comprend au moins une rainure (111) pratiquée dans l'épaisseur dudit plateau supérieur (11), ladite rainure (111) étant apte à recevoir un pion de pré-centrage solidaire dudit caisson (20), ledit pion venant s'insérer dans ladite rainure (111) pour permettre le positionnement dudit caisson (20) sur ledit plateau supérieur.

3. Masse principale selon la revendication 2, **caractérisé en ce que** ladite rainure (111) s'étend dans une direction sensiblement parallèle la direction de progression du tracteur et débouche au niveau de la face (13) orientée sensiblement transversalement à la direction de progression du tracteur située à l'opposé du tracteur par rapport à ladite masse principale lorsque ladite masse principale est fixée sur le tracteur.

4. Masse principale selon la revendication 2 ou 3, **caractérisé en ce que** ladite rainure (111) présente au moins une butée permettant de figer ledit caisson (20) sur ledit plateau supérieur (11) dans une position prédéterminée lorsqu'il est rapporté sur ladite masse principale (10).

5. Masse principale selon l'une quelconque des revendications précédentes, **caractérisé en ce que** chacune desdites faces latérales (15, 16) comporte deux orifices de fixation (150) alignés verticalement pour la fixation dudit caisson.

6. Masse principale selon l'une quelconque des revendications précédentes, **caractérisé en ce que** ladite masse principale est adaptée pour être fixée au tracteur par l'intermédiaire de deux axes transversaux (2, 3) constituant respectivement un moyen de prise pour un dispositif de relevage du tracteur, chacun des axes transversaux étant monté rigidement et perpendiculairement au travers d'un étrier de fixation (4) apte à être fixé sur ladite masse principale au travers desdits orifices de fixation (150) prévus sur lesdites faces latérales (15, 16) de ladite masse principale.

7. Masse principale selon la revendication 6, **caractérisé en ce que** ledit étrier de fixation (4) présente au moins deux positions de montage desdits axes transversaux (2, 3) dans le sens vertical permettant de modifier la garde au sol de ladite masse principale lorsqu'elle est fixée au tracteur.

8. Masse principale selon l'une quelconque des revendications précédentes, **caractérisé en ce que** ladite masse principale comprend une empreinte de fixation (17) aménagée dans ladite face (14) orientée sensiblement transversalement à la direction de progression du tracteur située du côté du tracteur lorsque ladite masse principale est fixée sur le tracteur, ladite empreinte de fixation étant destinée à coopérer avec un porte-masse fixé rigidement au tracteur pour la fixation de ladite masse principale.

9. Masse principale selon l'une quelconque des revendications précédentes, **caractérisé en ce que** ladite masse principale comprend un moyen de manutention noyé dans ladite masse principale au niveau de ladite face (13) orientée sensiblement transversalement à la direction de progression du tracteur située à l'opposé du tracteur par rapport à ladite masse principale lorsque ladite masse principale est fixée sur le tracteur.

10. Caisson (20), notamment caisson à outils, **caractérisé en ce qu'**il est adapté pour être rapporté sur une masse principale (10) d'alourdissement selon l'une quelconque des revendications précédentes, ledit caisson comprenant des flasques latéraux (22, 23) en prolongement de parois latérales (24, 25) dudit caisson, aptes à être rapportés en applique contre les lesdites faces latérales (15, 16) de ladite masse principale et au moins un pion de pré-centrage solidaire dudit caisson apte à coopérer avec ledit moyen de pré-positionnement et de centrage (110) solidaire dudit plateau supérieur (11) de ladite masse principale.

11. Caisson selon la revendication 10, **caractérisé en ce qu'**il est adapté pour être rapporté sur une masse principale d'alourdissement selon la revendication 6 ou 7, et **en ce que** les parois latérales (24, 25) comportent au moins un alésage (27) à travers lequel est apte à déboucher à l'intérieur du caisson une portion d'extrémité de l'axe transversal (2, 3) traversant ledit étrier de fixation (4).

12. Caisson selon la revendication 10 ou 11, **caractérisé en ce qu'**il comprend une potence (5) agencée au niveau d'une paroi arrière (26) dudit caisson, destinée à coopérer avec un bras de retenue solidaire du tracteur, ladite potence étant formée de deux platines verticales (51, 52) faisant saillie vers le haut depuis un bord supérieur (260) de ladite paroi arrière caisson et entre lesquelles un axe de retenue est apte à être monté pour la liaison avec ledit bras de retenue.

13. Dispositif de lestage (1) pour tracteur, notamment pour tracteur agricole, **caractérisé en ce qu'**il comprend une masse principale (10) d'alourdissement selon l'une quelconque des revendications 1 à 9 et un caisson (20) selon l'une des revendications 10 à 12, rapporté sur ladite masse principale (10).

## Patentansprüche

1. Eine Hauptmasse (10) zur Beschwerung in gegossener Form, die dazu bestimmt ist, an einer Hebevorrichtung oder einem Massenträger eines Traktors, insbesondere eines landwirtschaftlichen Typs, befestigt zu werden, wobei die genannte Hauptmasse (10) eine Oberseite (11), eine Unterseite (12), zwei Flächen (13, 14), die im Wesentlichen quer zur Fahrtrichtung des Traktors ausgerichtet sind, und zwei Seitenflächen (15, 16) umfasst, die im Wesentlichen parallel zur Fahrtrichtung verlaufen, wenn sie am Traktor befestigt sind, wobei die genannte Hauptmasse an ihrer Unterseite (12) mindestens eine weibliche Aufnahme (121, 122) in Schwalbenschwanzform aufweist, die dazu geeignet ist, mit einem entsprechenden männlichen Schwalbenschwanzvorsprung einer sekundären Beschwerungsmasse zusammenzuwirken, um die genannte sekundäre Beschwerungsmasse entlang einer Einsteckrichtung, die im Wesentlichen parallel zur Fahrtrichtung des Traktors verläuft, formschlüssig zu montieren, wobei die Vorrichtung **dadurch gekennzeichnet ist, dass** die genannte Oberseite (11) eine obere Platte bildet, die Mittel zum Vorpositionieren und Zentrieren (110) eines Kastens (20) umfasst, der dazu bestimmt ist, auf der Hauptmasse angebracht zu werden, und dass die genannten Seitenflächen (15, 16) dazu geeignet sind, mit Seitenwangen (22, 23) des genannten Kastens zusammenzuwirken, die aufliegend an den Seitenflächen angebracht sind, und Befestigungslöcher (150) umfassen, die dazu geeignet sind Befestigungsschrauben aufzunehmen, die mit den genannten Seitenwangen zur Befestigung des Kastens an der Hauptmasse zusammenwirken.

2. Die Hauptmasse nach Anspruch 1, **dadurch gekennzeichnet, dass** das genannte Vorpositionierungs- und Zentriermittel (110) mindestens eine Nut (111) umfasst, die in der Dicke der oberen Platte (11) gewonnen wird, wobei die genannte Nut (111) zur Aufnahme eines mit dem genannten Kasten (20) fest verbundenen Vorpositionierungsstiftes geeignet ist, wobei der genannte Stift in die genannte Nut (111) eingesetzt wird, um die Positionierung des genannten Kastens (20) auf der genannten oberen Platte zu ermöglichen.

3. Die Hauptmasse nach Anspruch 2, **dadurch gekennzeichnet, dass** sich die genannte Nut (111) in einer Richtung erstreckt, die im Wesentlichen zur Fahrtrichtung des Traktors parallel ist, und im Bereich der Fläche (13) mündet, die im Wesentlichen quer zur Fahrtrichtung des Traktors ausgerichtet ist gegenüber dem Traktor bezüglich der Hauptmasse, wenn die Hauptmasse am Traktor befestigt ist.

4. Die Hauptmasse nach Anspruch 2 oder 3, **dadurch gekennzeichnet, dass** die genannte Nut (111) mindestens einen Anschlag aufweist, der es ermöglicht, dass der genannte Kasten (20) auf der genannten oberen Platte (11) in einer vorbestimmten Position fixiert wird, wenn er an der genannten Hauptmasse (10) angebracht ist.

5. Die Hauptmasse nach irgendeinem der vorstehenden Ansprüche, **dadurch gekennzeichnet, dass** jede der genannten Seitenflächen (15, 16) zwei Befestigungslöcher (150) umfasst, die zur Befestigung des genannten Kastens vertikal ausgerichtet sind.

6. Die Hauptmasse nach irgendeinem der vorstehenden Ansprüche, **dadurch gekennzeichnet, dass** die genannte Hauptmasse dazu angepasst ist, am Traktor mittels zweier Querachsen (2, 3) befestigt zu werden, die jeweils ein Greifmittel für eine Hebevorrichtung des Traktors bilden, wobei jede der Querachsen starr und senkrecht durch einen Befestigungsbügel (4) montiert ist, der dazu geeignet ist, durch die auf den genannten Seitenflächen (15, 16) der genannten Hauptmasse vorgesehenen genannten Befestigungslöcher (150) an der genannten Hauptmasse befestigt zu werden.

7. Die Hauptmasse nach Anspruch 6, **dadurch gekennzeichnet, dass** der genannte Befestigungsbügel (4) in vertikaler Richtung mindestens zwei Befestigungspositionen der genannten Querachsen (2, 3) aufweist, die es ermöglichen, die Bodenfreiheit der genannten Hauptmasse zu ändern, wenn sie am Traktor befestigt ist.

8. Die Hauptmasse nach irgendeinem der vorstehenden Ansprüche, **dadurch gekennzeichnet, dass** die genannte Hauptmasse eine in der genannten Fläche (14) ausgebildete Befestigungsvertiefung (17) umfasst, die im Wesentlichen quer zur genannten Fahrtrichtung des Traktors ausgerichtet ist und traktorseitig liegt, wenn die Hauptmasse am Traktor befestigt ist, wobei die genannte Befestigungsvertiefung dazu bestimmt ist, mit einem fest am Traktor befestigten Massenträger zum Befestigen der Hauptmasse zusammenzuwirken.

9. Die Hauptmasse nach irgendeinem der vorstehenden Ansprüche, **dadurch gekennzeichnet, dass** die genannte Hauptmasse eine im Bereich der Stirnseite (13) in die Hauptmasse eingebettete Handhabungseinrichtung umfasst, die im Wesentlichen quer zur Fahrtrichtung des Traktors ausgerichtet ist und die sich bezüglich der Hauptmasse gegenüber dem Traktor befindet, wenn die Hauptmasse am Traktor befestigt ist.

10. Ein Kasten (20), insbesondere Werkzeugkasten, **dadurch gekennzeichnet, dass** er angepasst ist, um auf eine Beschwerungs-Hauptmasse (10) nach irgendeinem der vorstehenden Ansprüche angebracht zu werden, wobei der genannte Kasten Folgendes umfasst: in Verlängerung der Seitenwände (24, 25) des genannten Gehäuses, Seitenwangen (22, 23), die dazu geeignet sind, anliegend an den genannten Seitenflächen (15, 16) der genannten Hauptmasse angebracht zu werden, und mindestens einen mit dem genannten Kasten (20) fest verbundenen Vorpositionierungsstift, der dazu geeignet ist, um mit dem genannten Vorpositionierungs- und Zentrierungsmittel (110) zusammenzuwirken, das mit dem genannten oberen Plateau (11) der genannten Hauptmasse fest verbunden ist.

11. Der Kasten nach Anspruch 10, **dadurch gekennzeichnet, dass** er dazu angepasst ist, um auf einer Beschwerungs-Hauptmasse nach Anspruch 6 oder 7 angebracht zu werden, und dass die Seitenwände (24, 25) mindestens eine Bohrung (27) umfassen, durch die ein Endabschnitt der durch den Befestigungsbügel (4) verlaufenden Querachse (2, 3) in den Kasten münden kann.

12. Der Kasten nach Anspruch 10 oder 11, **dadurch gekennzeichnet, dass** er einen Ausleger (5) umfasst, der im Bereich einer Rückwand (26) des genannten Kastens angeordnet ist und dazu bestimmt ist, mit einem mit dem Traktor fest verbundenen Haltearm zusammenzuwirken, wobei der genannte Ausleger durch zwei vertikale Platten (51, 52) gebildet wird, die ausgehend von einem oberen Rand (260) der genannten Kasten-Rückwand nach oben ragen und zwischen denen eine Halteachse zur Verbindung mit dem Haltearm montiert werden kann.

13. Eine Beschwerungs- bzw. Ballastier-Vorrichtung (1) für einen Traktor, insbesondere für einen landwirtschaftlichen Traktor, **dadurch gekennzeichnet, dass** sie eine Beschwerungs-Hauptmasse (10) nach irgendeinem der Ansprüche von 1 bis 9 und einen Kasten (20) nach irgendeinem der Ansprüche von 10 bis 12 umfasst, der am genannten Hauptgewicht (10) angebracht ist.

## Claims

1. Main ballasting mass (10) made by foundry, intended to be secured to a lifting device or a mass holder of a tractor, especially of agricultural type, said main mass (10) comprising an upper face (11), a lower face (12), two faces (13, 14) directed substantially crosswise to the moving direction of the tractor, and two side faces (15, 16) substantially parallel to the moving direction when it is fixed to the tractor, said main mass having on its lower face (12) at least a housing (121, 122) into a female dovetail form intended to cooperate with a corresponding protuberance into a male dovetail form of a secondary ballasting mass for the assembly by fitting of said secondary ballasting mass according to a fitting direction substantially parallel to the moving direction of the tractor, said device being **characterized in that** said upper face (11) form an upper plate including a pre-positioning and centering means (110) for a box (20) intended to be brought back on said main mass, and **in that** said side faces (15, 16) are intended to cooperate with side flasks (22, 23) of said box brought back as brackets to said side faces and include fixing holes (150) in order to receive fastening screws cooperating with said side flasks for securing said box on said main mass.

2. Main mass according to claim 1, **characterized in that** said pre-positioning and centering means (110) comprises at least one groove (111) provided in the thickness of said upper plate (11), said groove (111) being intended to receive a pre-centering pin unitary formed with said box (20), said pin being fitted into said groove (111) to allow positioning of said box (20) on said upper plate.

3. Main mass according to claim 2, **characterized in that** said groove (111) extends in a direction substantially parallel to the moving direction of the tractor and open at the face (13) directed substantially crosswise to the moving direction of the tractor, located at the opposite of the tractor relatively to said main mass when said main mass is attached to the tractor.

4. Main mass according to claim 2 or 3, **characterized in that** said groove (111) includes at least one stop making it possible to secure said box (20) on said upper plate (11) in a predetermined position when it is brought back on said main mass (10).

5. Main mass according to any of preceding claims, **characterized in that** each one of said side faces (15, 16) comprises two fixing holes (150) vertically aligned for the fixing of said box.

6. Main mass according to any of preceding claims, **characterized in that** said main mass is adapted to be secured to the tractor via two transversal axes (2, 3) respectively constituting an engaging means for a lifting device of the tractor, each of the transversal axes being mounted rigidly and perpendicularly through a fixing clamp (4) intended to be fixed to said main mass through said fixing holes (150) provided on said side faces (15, 16) of said main mass.

7. Main mass according to claim 6, **characterized in that** said fixing clamp (4) is provided with at least two mounting positions for said transversal axes (2, 3) in the vertical direction making it possible to modify the ground clearance of said main mass when it is attached to the tractor.

8. Main mass according to any of preceding claims, **characterized in that** said main mass comprises a fixing print (17) formed into said face (14) directed substantially crosswise to the moving direction of the tractor located on the tractor side when said main mass is attached to the tractor, said fixing print being intended to cooperate with a mass holder rigidly fixed to the tractor for the fixing of said main mass.

9. Main mass according to any of preceding claims, **characterized in that** said main mass comprises a handling means embedded into said main mass at said face (13) directed substantially crosswise to the moving direction of the tractor located at the opposite of the tractor relatively to said main mass when said main mass is attached to the tractor.

10. Box (20), especially a tool box, **characterized in that** it is adapted to be brought back on a main ballasting mass (10) according to any of preceding claims, said box comprising side flasks (22, 23) extending from side walls (24, 25) of said box, intended to be brought back as brackets against said side faces (15, 16) of said main mass and at least one pre-centering pin unitary formed with said box in order to cooperate with said pre-positioning and centering means (110) unitary formed with said upper plate (11) of said main mass.

11. Box according to claim 10, **characterized in that** it is adapted to be brought back on a main ballasting mass according to claim 6 or 7, and **in that** the side walls (24, 25) comprise at least one bore (27) through which an end portion of the transversal axis (2, 3) crossing said fixing clamp (4) is intended to emerge inside the box.

12. Box according to claim 10 or 11, **characterized in that** it comprises a bracket (5) arranged at a rear wall (26) of said box, in order to cooperate with a holding arm unitary formed with the tractor, said bracket being formed with two vertical supports (51, 52) extending upwards from an upper edge (260) of said rear wall of the box and between which a holding axis is intended to be assembled for connection with said holding arm.

13. Ballasting device (1) for a tractor, especially for a farm tractor, **characterized in that** it comprises a main ballasting mass (10) according to any of claims 1 to 9 and a box (20) according to one of claims 10 to 12, brought back on said main mass (10).
